# EUROPÄISCHE PATENTSCHRIFT

(11) **EP 1 939 047 B1**
(45) Veröffentlichungstag und Bekanntmachung des Hinweises auf die Patenterteilung: **16.02.2011**
(21) Anmeldenummer: 07120871.4
(22) Anmeldetag: 16.11.2007
(51) Int. Cl.: B60R 21/015

(54) **Verfahren und Vorrichtung zur Erkennung einer Belegung eines Sitzelementes eines Fahrzeugsitzes**
Method and device for recognising occupancy of a seat in a vehicle
Procédé et dispositif destinés à la reconnaissance de l'occupation d'un élément de siège d'un siège de véhicule

(30) Priorität: 28.12.2006 DE 102006061669
(43) Veröffentlichungstag der Anmeldung: 02.07.2008
(73) Patentinhaber: Robert Bosch GmbH, 70442 Stuttgart (DE)
(72) Erfinder: Krueger, Hartmut, 77830 Buehlertal (DE); Heimburger, Stefan, 77731 Willstaett-Legelshurst (DE)

(56) Entgegenhaltungen:
- DE-A1- 10 163 880
- DE-A1- 19 734 508
- DE-A1-102004 047 907
- DE-C1- 19 925 180

## Beschreibung

Die Erfindung betrifft ein Verfahren und eine Vorrichtung zur Erkennung einer Fahrzeugsitzbelegung, insbesondere zur Verwendung mit einem Airbag-System.

Ein wesentlicher Zweck des Vorsehens einer Erkennung einer Fahrzeugsitzbelegung besteht darin, festzustellen, ob sich eine Person auf dem Sitz befindet. Weiterhin ist es sinnvoll, zu unterscheiden, ob es sich dabei um eine Person normaler Größe (Erwachsener) oder um eine kleine Person, wie z.B. ein Kind, handelt. In Abhängigkeit davon wird dann, z. B. bei einem Unfall, ein Airbag eines Airbag-System gezündet bzw. nicht gezündet. Insbesondere soll bei einem nicht belegten Fahrzeugsitz der Airbag nicht gezündet werden, um unnötige Kosten zu vermeiden. Ebenso soll ein Airbag nicht aktiviert werden, wenn ein Kind auf dem Fahrzeugsitz sitzt, da das Aktivieren eines Airbags für Kinder gefährlich sein kann.

Bislang werden zur Belegungserkennung eines Fahrzeugsitzes geeignete Sensoren bzw. Belegungsmatten vorgesehen, die feststellen, ob der Fahrzeugsitz belegt ist oder nicht.

DE 197 34 508 A1 offenbart ein Verfahren zur Ermittlung einer Angabe über das Belegungsgewicht eines Fahrzeugsitzes, wobei ein Sitzelement des Fahrzeugsitzes mit Hilfe einer Antriebseinheit verstellbar ist, mit folgenden Schritten: Bereitstellen mindestens eines Messsignals, das einen Zustand der Antriebseinheit darstellt; Ansteuern der Antriebseinheit für zumindest eine vorbestimmte Zeitdauer während der Zeit des Ansteuerns, Erfassen des Messsignals, Ermitteln eines Lastmomentes aus dem Messsignal gemäß einem Motormodell; und Ermitteln einer Angabe über das Belegungsgewicht des Sitzelementes abhängig von dem Lastmoment.

Weiterhin ist aus der Druckschrift DE 101 63 880 A1 eine Vorrichtung zur Erkennung einer Sitzbelegung bekannt, wobei die Belegung des Sitzes aus einem Betriebsstrom eines Motors, der für eine Sitzpositionsverstellung verwendet wird, abgeleitet wird. Eine Sitzbelegung wird erkannt, indem vor Beginn des Fahrbetriebs mit Hilfe einer Testverstellung des Sitzes der Betriebsstrom des entsprechenden Motors ermittelt wird und anschließend, z. B. bei einem Losfahren, durch eine erneute Verstellung des Motors ein weiterer Betriebsstrom ermittelt wird, der mit dem zuvor detektierten Betriebsstrom zu Fahrtbeginn verglichen wird. Unterscheiden sich die Betriebsströme wesentlich voneinander, wird eine Sitzbelegung festgestellt.

Eine solche Vorrichtung ist jedoch nicht dazu geeignet, eine Belegung des Sitzes durch ein Kind von der Belegung des Sitzes durch eine erwachsene Person zu unterscheiden, da lediglich eine Belegt-/Nicht-Belegt-Information durch Vergleich von Betriebsströmen des entsprechenden Motors im unbelegten und im potentiell belegten Zustand zu bestimmen. Weiterhin berücksichtigt die dort beschriebene Vorrichtung nicht die verschiedenen Kinematiken, über die der entsprechende Motor mit den verstellbaren Elementen des Fahrzeugsitzes gekoppelt ist, so dass durch Ermitteln der Differenz des Betriebsstroms keine Rückschlüsse auf ein Gewicht einer den Fahrzeugsitz belegenden Person bestimmt werden kann.

Daraus ergibt sich als Aufgabe der vorliegenden Erfindung, die Belegung eines Fahrzeugsitzes zu ermitteln, so dass zumindest festgestellt werden kann, ob der Sitz nicht, durch ein Kind oder durch eine erwachsene Person belegt ist. Es ist weiterhin Aufgabe der vorliegenden Erfindung, ein Verfahren und eine Vorrichtung zur Erkennung einer Belegung eines Fahrzeugsitzes zur Verfügung zu stellen.

Diese Aufgaben werden durch das Verfahren zur Erkennung einer Belegung eines Sitzelements eines Fahrzeugsitzes gemäß Anspruch 1 sowie durch eine Vorrichtung gemäß dem nebengeordneten Anspruch gelöst.

Weitere vorteilhafte Ausgestaltungen der Erfindung sind in den abhängigen Ansprüchen angegeben.

Gemäß einem Aspekt ist ein Verfahren zur Ermittlung einer Angabe über das Belegungsgewicht eines Fahrzeugsitzes vorgesehen, wobei ein Sitzelement des Fahrzeugsitzes mit Hilfe einer Antriebseinheit verstellbar ist. Das Verfahren umfasst die Schritte des Bereitstellens mindestens eines Messsignals, das einen Zustand der Antriebseinheit darstellt; des Ansteuerns der Antriebseinheit für zumindest eine vorbestimmte Zeitdauer; des Erfassens des Messsignals während der Zeit des Ansteuerns; des Ermittelns eines Lastmomentes aus dem Messsignal gemäß einem Motormodell und des Ermittelns einer Angabe über das Belegungsgewicht des Sitzelementes abhängig von dem Lastmoment.

Vorzugsweise kann vorgesehen sein, dass als Messsignal eine Angabe einer Motorlage erfasst wird, wobei abhängig von einem bereitgestellten Lastprofil für das Sitzelement in einem unbelasteten Zustand oder in einem definiert belasteten Zustand ein und abhängig von der Motorlage ein Referenzlastmoment ermittelt wird, wobei abhängig von dem Referenzlastmoment und dem ermittelten Lastmoment das Belegungsgewicht ermittelt wird.

Eine Idee der vorliegenden Erfindung besteht darin, ein Verfahren zur Verfügung zu stellen, bei dem durch Auswertung eines von einer entsprechenden Antriebseinheit bereitgestellten Messsignals, wie z. B. einer Motorlage, einer Motorspannung und dgl. eine Angabe über das Belegungsgewicht ermittelt werden kann. Das Belegungsgewicht gibt an, ob und mit welchem Belegungsgewicht ein Fahrzeugsitz belegt ist. Die die Antriebseinheit betreffenden Messsignale können daher in einem entsprechenden Motormodell in eine Angabe über das aktuelle Lastmoment umgerechnet werden, das ein Motor der Antriebseinheit aufbringen muss. Aus dem berechneten Lastmoment wird das Belegungsgewicht abgeleitet.

Bei Verwendung eines Lastprofils, das abhängig von der Motorlage ein zu erwartendes Lastmoment bei einem nicht oder definiert belasteten Fahrzeugsitz ermittelt, erhält man ein Referenzlastmoment. Mit Hilfe des Referenzlastmomentes kann man trotz einer unter Umständen nicht-linearen Kinematik des Sitzelementes des Fahrzeugsitzes das Belegungsgewicht ermitteln. Das Vorsehen des Lastprofil, in dem z. B. lageabhängige, strukturelle Lasten abgelegt sind, ermöglicht es also, z. B. Reibung, Gewichtskraft des Sitzes, sowie eine zumindest teilweise nicht-lineare Übersetzung der Sitzelement-Kinematik zu berücksichtigen. Auf diese Weise kann bei jeder Sitzposition das Belegungsgewicht ermittelt werden.

Weiterhin kann das Belegungsgewicht abhängig von dem Referenzlastmoment und abhängig von dem ermittelten Lastmoment mit Hilfe einer Sitzelement-Kinematik, die ein mechanisches Kopplungsverhältnis zwischen Antriebseinheit und Sitzelement definiert, ermittelt werden.

Gemäß einer Ausführungsform können als Messsignale eine Angabe einer Klemmenmotorspannung eines Motors der Antriebseinheit und eine Angabe einer Winkellage des Motors bereitgestellt werden. Alternativ können als Messsignale eine Angabe einer Klemmenmotorspannung eines Motors der Antriebseinheit und eine Angabe eines Motorstromes bereitgestellt werden, wobei die Motorlage durch Zählen von Signal-Welligkeiten in mindestens einem der Messsignale ermittelt wird.
Vorzugsweise kann das Ansteuern der Antriebseinheit für die vorbestimmte Zeitdauer manuell oder automatisch abhängig von mindestens einem der folgenden Signale gestartet werden: ein Signal, dass angibt, dass eine Fahrt beginnt; ein Signal, dass ein Schließen einer der Fahrzeugsitz zugeordnete Fahrzeugtür angibt; und ein Signal, das ein Anlegen oder Abschnallen eines Anschnallgurtes angibt.

Weiterhin kann das Ansteuern der Antriebseinheit für die vorbestimmte Zeitdauer in Verbindung mit einer Komfortfunktion durchgeführt werden, bei das Sitzelement zum Erleichtern des Einsteigens verfahren wird.

Gemäß einer Ausführungsform kann das Motormodell anhand des mindestens einen Messsignals, insbesondere mit Hilfe eines Parameterschätzverfahrens, aktualisiert werden.

Es kann vorgesehen sein, dass das Lastmodell regelmäßig oder zu vorgegebenen Zeitpunkten, insbesondere bei einem Aufschließen einer dem Fahrzeugsitz zugeordneten Fahrzeugtür, anhand einer Referenzverstellung, bei der die Antriebseinheit für eine vorbestimmte Zeitdauer angesteuert wird, im unbelasteten oder definiert belasteten Zustand des Fahrzeugsitzes aktualisiert wird.

Gemäß einem Aspekt ist eine Vorrichtung zur Ermittlung einer Angabe über das Belegungsgewicht eines Fahrzeugsitzes vorgesehen. Die Vorrichtung umfasst eine Antriebseinheit zum Verstellen eines Sitzelementes des Fahrzeugsitzes, einen Detektor zum Bereitstellen mindestens eines Messsignals, das einen Zustand der Antriebseinheit darstellt, und eine Steuereinheit, die ausgebildet ist, um die Antriebseinheit für zumindest eine vorbestimmte Zeitdauer zum Verstellen des Sitzelementes anzusteuern, um das Messsignals während der Zeit des Ansteuerns zu erfassen, um ein Lastmoment aus dem Messsignal gemäß einem Motormodell zu bestimmen, und um eine Angabe über das Belegungsgewicht des Sitzelementes abhängig von dem Lastmoment zu ermitteln.

Bevorzugte Ausführungsformen der Erfindung werden nachfolgend anhand der beigefügten Zeichnungen näher erläutert. Es zeigen:
Figur 1 eine schematische Darstellung eines Gesamtsystems mit einer Vorrichtung zur Erkennung einer Belegung eines Fahrzeugsitzes;
Figur 2 zeigt ein Blockdiagramm zur Veranschaulichung der Ermittlung einer Angabe über das Belegungsgewicht gemäß einer weiteren Ausführungsform;
Figur 3 ein Blockdiagramm zur Veranschaulichung der Ermittlung einer Angabe über das Belegungsgewicht gemäß einer weiteren Ausführungsform; und
Figur 4 ein Blockdiagramm zur Veranschaulichung der Ermittlung einer Angabe über das Belegungsgewicht gemäß einer weiteren Ausführungsform.

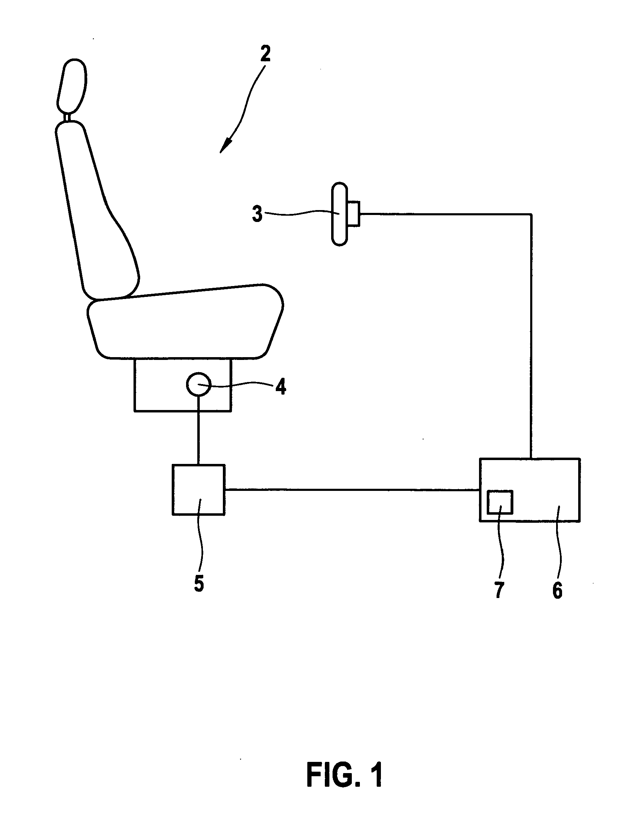

Figur 1 zeigt ein Gesamtsystem zur Erkennung einer Belegung eines Fahrzeugsitzes 2 z.B. zur Steuerung eines Airbags 3. Der Fahrzeugsitz 2 besteht aus mehreren Sitzelementen, wie z.B. Rückenlehne, Sitzkissen usw., die jeweils durch eine entsprechende Antriebseinheit 4 elektrisch in geeigneter Weise (Höhe, Neigung usw.) verstellt werden können. In der dargestellten Figur 1 ist aus Gründen einer besseren Übersichtlichkeit nur eine elektrische Antriebseinheit 4 für die Verstellung der Sitzhöhe dargestellt. Alternativ können auch eine Antriebseinheit zur Verstellung der Sitzlehne und andere Sitzelemente verstellende Antriebseinheiten zur Erkennung der Belegung verwendet werden.

Die Antriebseinheit 4 umfasst in der Regel ein Elektromotor (nicht gezeigt), der über ein entsprechendes mechanisches Kopplungselement, z.B. ein Übersetzungsgetriebe, mit dem anzusteuernden Sitzelement gekoppelt ist, so dass dieses bei einem Betrieb des Elektromotors in seiner Sitzhöhe verstellt wird. Die Antriebseinheit 4 wird über eine geeignete Treibereinheit 5 z.B. mit pulsweitenmodulierten Spannungen oder dergleichen angesteuert, um eine Drehzahl bzw. ein Drehmoment des Motors der Antriebseinheit 4 vorzugeben.

Die Ansteuerung der Antriebseinheit 4 erfolgt durch entsprechende Stellgröße einer Steuereinheit 6, die der Treibereinheit 5 bereitgestellt wird. Die Steuereinheit 6 liefert auch ein Belegungssignal an den Airbag 3. Der Airbag 3 kann abhängig von dem Belegungssignal bei Auftreten des Auslösefalls aktiviert werden oder nicht. Das Belegungssignal kann auch zum Steuern anderer Funktionen des Fahrzeugs verwendet werden und einer sonstige Einrichtung im Fahrzeug z.B. über ein Bordnetz (nicht gezeigt) bereitgestellt werden.

Die Steuereinheit 6 führt neben der Wahrnehmung anderer Funktionen, die die Einstellung von Sitzpositionen betreffen, auch die Funktion zur Ermittlung einer Angabe über das Belegungsgewicht aus. Dazu werden über geeignete Detektoren (nicht gezeigt) in der Treibereinheit 5 die Motorklemmenspannung U und der Motorwinkel p, der einer Lageinformation des Rotors des Motors entsprechend kann, als Messsignale erfasst und der Steuereinheit 6 bereitgestellt.

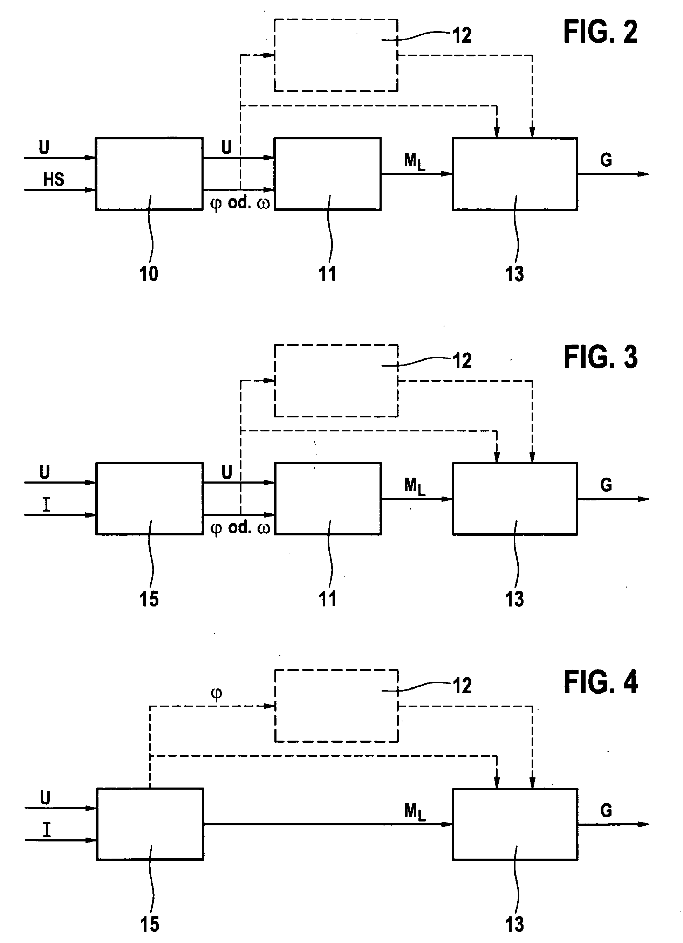

In der Steuereinheit 6 ist ein Auswertealgorithmus implementiert, wie er beispielsweise schematisch als Blockdiagramm in Fig. 2 dargestellt ist. Die Motorklemmenspannung U und der Motorwinkel p werden zunächst einem Filter 10, vorzugsweise einem Tiefpassfilter zugeführt, um hochfrequente Signaleinflüsse z.B. aus der pulsweitenmodulierten Ansteuerung herauszufiltern. Der Filter ist optional und kann je nach Qualität der bereitgestellten Messsignale auch weggelassen werden.

Anschließend werden die Messsignale, die Motorklemmenspannung U und der Motorwinkel p, einem Motormodell 11 zugeführt, das z. B. in einer Speichereinheit 7, der Steuereinheit 6 definiert sein kann. Das Motormodell 11 beschreibt das Verhalten der Antriebseinheit 4 und ermittelt aus den bereitgestellten Messsignalen das Lastmoment, mit dem die Antriebseinheit 4 beaufschlagt ist. Im Idealfall kann aus dem ermittelten Lastmoment unmittelbar auf das Gewicht geschlossen werden, mit dem der Fahrzeugsitz belegt ist.

Das in der Speichereinheit 7 abgelegte Motormodell 11 kann vorzugsweise anhand der Messsignale z. B. mit Verwendung eines geeigneten, aus dem Stand der Technik bekannten Parameterschätzverfahren bei jeder Bereitstellung von Messsignalen oder in bestimmten zeitlichen Abständen aktualisiert werden.

Weiterhin wird die durch das Messsignal "Motorwinkel" vorgegebene absolute Position des zu verstellenden Sitzelements des Fahrzeugsitzes 2 der Antriebseinheit 4 angegeben und aus dieser gemäß einem bereitgestellten Lastprofil 12 ein zu erwartendes Referenzlastmoment bei einer Nichtbelegung bzw. einer definierten Belegung des Fahrzeugsitzes ermittelt. Das Lastprofil 12 kann ebenfalls in der Speichereinheit 7 gespeichert sein und kann eingelernt oder fest vorgegeben werden und berücksichtigt lageabhängige, strukturelle Lasten, wie z. B. Reibung, Gewichtskraft des Sitzes unter Berücksichtigung der teilweisen nicht-linearen Übersetzung der Sitz-Kinematik. Das heißt, zu jeder Verstellposition des entsprechenden Sitzelementes sind Parameter abgelegt, aus denen sich die dort notwendige Motorlast zur Verstellung des Sitzelementes bei einer Nicht-Belegung (oder bei einer definierten Belegung) ermitteln lässt.

In einer Auswertestufe 13 kann durch Bildung der Differenz zwischen dem über das Motormodell 11 ermittelten Lastmoment und dem gemäß dem Lastprofil 12 zu erwartenden Referenzlastmoment bei einer Nichtbelegung des Fahrzeugsitzes 2 eine Lastdifferenz ermittelt werden, aus der unter Berücksichtigung der Kinematik des Fahrzeugsitzes 2, z. B. des Übersetzungsverhältnisses der Mechanik, die Gewichtskraft, mit der das Sitzelement belastet ist, bestimmt werden kann.

Vorzugsweise wird zur Lastermittlung der Unterschied zwischen einer im Motormodell 11 berechneten Zustandsgröße und der Messgröße herangezogen. Eine Möglichkeit kann dabei darin bestehen, einen aus der Regelungstechnik bekannten Störgrößenbeobachter zu verwenden.

Die Gewichtskraft, mit der der Sitz belastet ist, kann nun in der Steuereinheit 6 anhand von Schwellwerten klassifiziert werden und so überprüft werden, ob sie einem nicht belegten Fahrzeugsitz, einem durch ein Kind belegten Fahrzeugsitz oder einem durch eine erwachsene Person belegten Fahrzeugsitz entspricht. Dies kann durch das Belegungssignal angegeben werden.

Nur wenn festgestellt wird, dass der Fahrzeugsitz durch eine erwachsene Person belegt ist, kann durch das Belegungssignal dem Airbag 3 angezeigt werden, dass dieser im Auslösefall aktiviert erden soll, anderenfalls soll der Airbag im Auslösefall nicht aktiviert werden.

Der Motorwinkel, der zumindest zur Ermittlung der Motorlast bei einem nicht (oder mit einem definierten Gewicht) belegten Sitz gemäß dem Lastprofil 12 verwendet wird, lässt sich auf unterschiedliche Arten ermitteln. Zum einen lässt sich ein Rotorlagewinkel aus einem Hall-Lagesensor auslesen, der mit Hilfe eines Hallsensorsignals HS die aktuelle Rotorlage der Antriebseinheit 4 bestimmt. Durch Integration des Hallsensorsignals (z.B. in einem Integrationsglied) lässt sich die absolute Rotorlage p ermitteln, durch zeitliche Ableitung die aktuelle Drehzahl ω.

Weiterhin kann eine Motorwinkelinformation p verwendet werden, die mit Hilfe eines Verfahrens zur sensorlosen Positionierung gewonnen wurde, das als Eingangsgrößen die Motorklemmenspannung U und den Motorstrom I erhält. Die Bestimmung des Belegungsgewichts anhand der Motorwinkelinformation, die aus dem Verfahren zur sensorlosen Positionierung ermittelt wird, ist beispielsweise in dem in Fig. 3 dargestellten Algorithmus gezeigt. Die sensorlose Positionierung 15 verwendet einen Beobachter (nicht gezeigt), der vorzugsweise ebenfalls in der Steuereinheit 6 integriert ist. Die sensorlose Positionserkennung ist im Stand der Technik bekannt und eine weitere Beschreibung wird deshalb verzichtet.

Weiterhin kann der Motorwinkel auch anhand der Detektion und Zählung von Signal-Welligkeiten erfolgen, die bei Betreiben des Motors der Antriebseinheit 4 im Motorstrom bzw. auf der Motorklemmenspannung U vorhanden sind.

Alternativ kann der Motorwinkel auch über ein Drehzahlsignal ermittelt werden, wobei das Drehzahlsignal ebenso wie der Motorwinkel durch Auswertung des Hall-Lagesensor-Signals des Positionsgebers, aus dem Beobachter der sensorlosen Positionierung bzw. aus dem Welligkeits-Zähler abgeleitet werden kann, der die Drehzahlinformation mit Hilfe einer Frequenzauswertung (Fourier-Transformation) einer Signal-Welligkeit bereitstellen kann.

Wie in Fig. 4 gezeigt, kann man alternativ zur Verwendung des Motorwinkels oder der Drehzahl für die Bestimmung des Lastmoments das Lastmoment auch direkt aus einem gemessenen Motorstrom der Antriebseinheit 4 ermitteln. Das Erfassen der Klemmenspannung U dient lediglich dazu die Motorlage p zu detektieren, die für die Bestimmung des Referenzlastmomentes durch das Lastprofil 12 notwendig ist.

Die zuvor beschriebenen Blöcke Filter 10, Motormodell 11, Lastprofil 12, Auswertestufe 13 sowie Stufe zur sensorlosen Positionierung 15 können wie zuvor beschrieben in der Steuereinheit 6 implementiert werden oder als davon getrennte Einheiten vorgesehen werden.

Zur Bestimmung der Belegungsgewichtsangabe muss die Antriebseinheit 4 angesteuert werden. Diese Ansteuerung kann kurzzeitig erfolgen und sowohl durch die Insassen des Fahrzeugs selbst eingeleitet werden oder automatisch eingeleitet werden. Die Antriebseinheit 4 wird vorzugsweise vor Beginn der Fahrt angesteuert, z. B. nach dem Schließen der zum Sitz gehörenden Tür bzw. nach dem Öffnen oder Schließen eines Anschnallgurtes während der Fahrt. Bei einer automatischen Ansteuerung der Antriebseinheit 4 kann beispielsweise eine Komfortfunktion verwendet werden, bei der zum Einsteigen der Fahrzeugsitz in eine das Einsteigen erleichternde Position verfahren wird und nach dem Einsteigen der Fahrzeugsitz in eine von der auf dem Fahrzeugsitz sitzenden Person bevorzugte Stellung verfahren wird. Während dieses Verfahrens in die von der auf dem Fahrzeugsitz sitzenden Position gewählten Stellung des Sitzelementes kann die entsprechende Belegungsgewichtsangabe ermittelt werden.

Um das Lastprofil 12 zu kalibrieren, können in vorgebbaren Abständen Referenzläufe mit einem unbelasteten Sitz durchgeführt werden, die beispielsweise beim Aufschließen des Fahrzeugs durchgeführt werden können.

## Patentansprüche

1. Verfahren zur Ermittlung einer Angabe über das Belegungsgewicht eines Fahrzeugsitzes (2), wobei ein Sitzelement des Fahrzeugsitzes mit Hilfe einer Antriebseinheit (4) verstellt wird, mit folgenden Schritten:
- Bereitstellen mindestens eines Messsignals, das einen Zustand der Antriebseinheit (4) darstellt;
- Ansteuern der Antriebseinheit (4) für zumindest eine vorbestimmte Zeitdauer;
- während der Zeit des Ansteuerns, Erfassen des Messsignals,
- Ermitteln eines Lastmomentes aus dem Messsignal gemäß einem Motormodell (11); und
- Ermitteln einer Angabe über das Belegungsgewicht des Sitzelementes abhängig von dem Lastmoment,
wobei als Messsignale eine Angabe einer Klemmenmotorspannung (U) eines Motors der Antriebseinheit und eine Angabe eines Motorstromes bereitgestellt werden, wobei die Motorlage durch Zählen von Signal-Welligkeiten in mindestens einem der Messsignale ermittelt wird.

2. Verfahren nach Anspruch 1, wobei als Messsignal eine Angabe einer Motorlage erfasst wird, wobei abhängig von einem bereitgestellten Lastprofil für das Sitzelement in einem unbelasteten Zustand oder in einem definiert belasteten Zustand ein und abhängig von der Motorlage ein Referenzlastmoment ermittelt wird, wobei abhängig von dem Referenzlastmoment und dem ermittelten Lastmoment das Belegungsgewicht ermittelt wird.

3. Verfahren nach Anspruch 2, wobei das Belegungsgewicht abhängig von dem Referenzlastmoment und abhängig von dem ermittelten Lastmoment mit Hilfe einer Sitzelement-Kinematik, die ein mechanisches Kopplungsverhältnis zwischen Antriebseinheit und Sitzelement definiert, ermittelt wird.

4. Verfahren nach einem der Ansprüche 1 bis 3, wobei als Messsignale eine Angabe einer Klemmenmotorspannung (U) eines Motors der Antriebseinheit und eine Angabe einer Winkellage des Motors bereitgestellt werden.

5. Verfahren nach einem der Ansprüche 1 bis 3, wobei in einer Auswertestufe 13 durch Bildung der Differenz zwischen dem über das Motormodell 11 ermittelten Lastmoment und dem gemäß dem Lastprofil 12 zu erwartenden Referenzlastmoment bei einer Nichtbelegung des Fahrzeugsitzes 2 eine Lastdifferenz ermittelt wird.

6. Verfahren nach einem der Ansprüche 1 bis 5, wobei das Ansteuern der Antriebseinheit für die vorbestimmte Zeitdauer manuell gestartet wird oder automatisch abhängig von einem der folgenden Signale gestartet wird:
- Signal, dass angibt, dass eine Fahrt beginnt;
- Signal, dass ein Schließen einer der Fahrzeugsitz zugeordnete Fahrzeugtür angibt; und
- Signal, das ein Anlegen oder Abschnallen eines Anschnallgurtes angibt.

7. Verfahren nach einem der Ansprüche 1 bis 6, wobei das Ansteuern der Antriebseinheit für die vorbestimmte Zeitdauer in Verbindung mit einer Komfortfunktion durchgeführt wird, bei das Sitzelement zum Erleichtern des Einsteigens verfahren wird.

8. Verfahren nach einem der Ansprüche 1 bis 7, wobei das Motormodell anhand des mindestens einen Messsignals, insbesondere mit Hilfe eines Parameterschätzverfahrens, aktualisiert wird.

9. Verfahren nach einem der Ansprüche 1 bis 8, wobei das Lastmodell regelmäßig oder zu vorgegebenen Zeitpunkten, insbesondere bei einem Aufschließen einer dem Fahrzeugsitz zugeordneten Fahrzeugtür, anhand einer Referenzverstellung, bei der die Antriebseinheit für eine vorbestimmte Zeitdauer angesteuert wird, im unbelasteten oder definiert belasteten Zustand des Fahrzeugsitzes aktualisiert wird.

10. Vorrichtung zur Ermittlung einer Angabe über das Belegungsgewicht eines Fahrzeugsitzes, umfassend:
- eine Antriebseinheit (4) zum Verstellen eines Sitzelementes des Fahrzeugsitzes (2);
- einen Detektor zum Bereitstellen mindestens eines Messsignals, das einen Zustand der Antriebseinheit darstellt;
- eine Steuereinheit (6), die ausgebildet ist, um die Antriebseinheit (4) für zumindest eine vorbestimmte Zeitdauer zum Verstellen des Sitzelementes anzusteuern, um das Messsignals während der Zeit des Ansteuerns zu erfassen, um ein Lastmoment aus dem Messsignal gemäß einem Motormodell (11) zu bestimmen, und um eine Angabe über das Belegungsgewicht des Sitzelementes abhängig von dem Lastmoment zu ermitteln, wobei als Messsignale eine Angabe einer Klemmenmotorspannung (U) eines Motors der Antriebseinheit und eine Angabe eines Motorstromes bereitgestellt Werden, wobei die Motorlage durch Zählen von Signal-Welligkeiten in mindestens einem der Messsignale ermittelt wird.

## Claims

1. Method for determining information about the occupancy weight of a vehicle seat (2), wherein a seat element of the vehicle seat is adjusted using a drive unit (4), having the following steps:
- provision of at least one measurement signal which represents the state of the drive unit (4);
- actuation of the drive unit (4) for at least one predetermined time period;
- acquisition of the measurement signal during the time of actuation;
- determination of a load torque from the measurement signal according to a motor model (11); and
- determination of information about the occupancy weight of the seat element as a function of the load torque,
wherein information about a terminal motor voltage (U) of a motor of the drive unit and information about a motor current are made available as measurement signals, wherein the motor position is determined by counting signal ripples in at least one of the measurement signals.

2. Method according to Claim 1, wherein information about a motor position is acquired as a measurement signal, wherein a reference load torque is determined as a function of a load profile which is made available for the seat element in an unloaded state or in a state of defined loading and as a function of the motor position, wherein the occupancy weight is determined as a function of the reference load torque and the determined load torque.

3. Method according to Claim 2, wherein the occupancy weight is determined as a function of the reference load torque and as a function of the determined load torque using seat element kinematics which define a mechanical coupling ratio between the drive unit and the seat element.

4. Method according to one of Claims 1 to 3, wherein information about a terminal motor voltage (U) of a motor of the drive unit and information about an angular position of the motor is made available as measurement signals.

5. Method according to one of Claims 1 to 3, wherein, when the vehicle seat (2) is not occupied, a load difference is determined in an evaluation stage (13) by forming the difference between the load torque determined by means of the motor model (11) and the reference load torque which is to be expected according to the load profile (12).

6. Method according to one of Claims 1 to 5, wherein the actuation of the drive unit is started manually for the predetermined time period or is started automatically as a function of one of the following signals:
- signal which indicates that a journey is beginning;
- signal that indicates that a vehicle door assigned to the vehicle seat is closing; and
- signal which indicates that a seat belt is being put on or taken off.

7. Method according to one of Claims 1 to 6, wherein the actuation of the drive unit is carried out for the predetermined time period in conjunction with a comfort function in which the seat element is moved in order to facilitate entry into the vehicle.

8. Method according to one of Claims 1 to 7, wherein the motor model is updated on the basis of the at least one measurement signal, in particular using a parameter estimation method.

9. Method according to one of Claims 1 to 8, wherein the load model is updated in the unloaded state or the state of defined loading of the vehicle seat regularly or at predefined time periods, in particular when a vehicle door which is assigned to the vehicle seat is closed, on the basis of a reference adjustment during which the drive unit is actuated for a predetermined time period.

10. Device for determining information about the occupancy weight of a vehicle seat, comprising:
- a drive unit (4) for adjusting a seat element of the vehicle seat (2);
- a detector for making available at least one measurement signal which represents the state of the drive unit;
- a control unit (6) which is designed to actuate the drive unit (4) for at least one predetermined time period for the adjustment of the seat element in order to acquire the measurement signal during the time of actuation in order to determine a load torque from the measurement signal according to a motor model (11) and in order to determine information about the occupancy weight of the seat element as a function of the load torque, wherein information about a terminal motor voltage (U) of a motor of the drive unit and information about a motor current are made available as measurement signals, wherein the motor position is determined by counting signal ripples in at least one of the measurement signals.

## Revendications

1. Procédé pour déterminer une indication concernant le poids d'occupation d'un siège de véhicule (2), un élément de siège du siège de véhicule étant réglé à l'aide d'une unité d'entraînement (4), comprenant les étapes suivantes :
- fournir au moins un signal de mesure qui décrit un état de l'unité d'entraînement (4) ;
- commander l'unité d'entraînement (4) pendant au moins une durée prédéterminée ;
- pendant la durée de la commande, détecter le signal de mesure,
- déterminer un couple de charge à partir du signal de mesure suivant un modèle de moteur (11) ; et
- déterminer une indication concernant le poids d'occupation de l'élément de siège en fonction du couple de charge,
une indication d'une tension de moteur à bornes (U) d'un moteur de l'unité d'entraînement et une indication d'un courant de moteur étant fournies en tant que signaux de mesure, la position du moteur étant déterminée par comptage d'ondulations de signal dans au moins l'un des signaux de mesure.

2. Procédé selon la revendication 1, dans lequel on détecte en tant que signal de mesure une indication d'une position du moteur, un couple de charge de référence étant déterminé en fonction d'un profil de charge fourni pour l'élément de siège dans un état non chargé ou dans un état chargé défini et en fonction de la position du moteur, le poids d'occupation étant déterminé en fonction du couple de charge de référence et du couple de charge déterminé.

3. Procédé selon la revendication 2, dans lequel le poids d'occupation est déterminé en fonction du couple de charge de référence et en fonction du couple de charge déterminé à l'aide d'une cinématique de l'élément de siège, qui définit un rapport d'accouplement mécanique entre l'unité d'entraînement et l'élément de siège.

4. Procédé selon l'une quelconque des revendications 1 à 3, dans lequel une indication d'une tension de moteur à bornes (U) d'un moteur de l'unité d'entraînement et une indication d'une position angulaire du moteur sont fournies en tant que signaux de mesure.

5. Procédé selon l'une quelconque des revendications 1 à 3, dans lequel, dans une étape d'analyse 13, en établissant la différence entre le couple de charge déterminé par le biais du modèle de moteur 11 et le couple de charge de référence attendu conformément au profil de charge 12, on détermine une différence de charge lorsque le siège du véhicule 2 n'est pas occupé.

6. Procédé selon l'une quelconque des revendications 1 à 5, dans lequel la commande de l'unité d'entraînement pour la durée prédéterminée est commencée manuellement ou est commencée automatiquement en fonction de l'un des signaux suivants :
- un signal qui indique qu'un déplacement à commencé ;
- un signal qui indique une fermeture d'une porte du véhicule associée au siège du véhicule ; et
- un signal qui indique le bouclage ou le débouclage d'une ceinture.

7. Procédé selon l'une quelconque des revendications 1 à 6, dans lequel la commande de l'unité d'entraînement pour la durée prédéterminée est effectuée en liaison avec une fonction de confort dans laquelle l'élément de siège est déplacé pour faciliter l'entrée.

8. Procédé selon l'une quelconque des revendications 1 à 7, dans lequel le modèle de moteur est actualisé à l'aide de l'au moins un signal de mesure, notamment à l'aide d'un procédé d'évaluation des paramètres.

9. Procédé selon l'une quelconque des revendications 1 à 8, dans lequel le modèle de charge est actualisé régulièrement ou à intervalles de temps prédéfinis, notamment dans le cas de l'ouverture d'une porte du véhicule associée au siège de véhicule, à l'aide d'un réglage de référence, dans lequel l'unité d'entraînement est commandée pendant une durée prédéterminée, dans l'état non sollicité ou sollicité de manière définie du siège du véhicule.

10. Dispositif pour déterminer une indication concernant le poids d'occupation d'un siège de véhicule, comprenant :
- une unité d'entraînement (4) pour régler un élément de siège du siège du véhicule (2) ;
- un détecteur pour fournir au moins un signal de mesure, qui représente un état de l'unité d'entraînement ;
- une unité de commande (6) qui est réalisée de manière à commander l'unité d'entraînement (4) pendant au moins une durée prédéterminée pour régler l'élément de siège, afin de détecter le signal de mesure pendant la durée de la commande, afin de déterminer un couple de charge à partir du signal de mesure suivant un modèle du moteur (11), et afin de déterminer une indication concernant le poids d'occupation de l'élément de siège en fonction du couple de charge, une indication d'une tension de moteur à bornes (U) d'un moteur de l'unité d'entraînement et une indication d'un courant de moteur étant fournies en tant que signaux de mesure, la position du moteur étant déterminée par comptage d'ondulations de signal dans au moins l'un des signaux de mesure.
